## Europäisches Patentamt

## European Patent Office

## Office européen des brevets

(11) Publication number: **0 144 435**
**B1**

(12) **EUROPEAN PATENT SPECIFICATION**

(45) Date of publication of patent specification: **29.08.90**

(21) Application number: **84901614.2**

(22) Date of filing: **19.04.84**

(86) International application number:
**PCT/JP84/00200**

(87) International publication number:
**WO 84/04267 08.11.84 Gazette 84/26**

(51) Int. Cl.⁵: **B 23 Q 15/00, G 05 B 19/18**

(54) **NUMERICAL CONTROL APPARATUS WITH AUTOMATIC TOOL DETERMINATION FUNCTION.**

(30) Priority: **20.04.83 JP 68389/83**

(43) Date of publication of application:
**19.06.85 Bulletin 85/25**

(45) Publication of the grant of the patent:
**29.08.90 Bulletin 90/35**

(84) Designated Contracting States:
**DE FR GB**

(56) References cited:
**FR-A-2 512 982**
**JP-A-5 486 887**
**JP-A-5 846 408**
**JP-A-58 143 941**
**JP-A-58 155 146**

(73) Proprietor: **FANUC LTD**
**3580, Shibokusa Aza-Komanba Oshino-mura**
**Minamitsuru-gun Yamanashi 401-05 (JP)**

(72) Inventor: **NAGAMINE, Tsuyoshi**
**11-9, Owadacho 7-chome**
**Hachiouji-shi Tokyo 192 (JP)**
Inventor: **INOUE, Tsuyoshi**
**Room 313 Toyoda Kouporasu 15-1,**
**Higashitoyoda**
**3-chome Hino-shi Tokyo 191 (JP)**
Inventor: **TORIYAMA, Shuji**
**Midoriso 5-8, Hukazawa 8-chome**
**Setagaya-ku Tokyo 158 (JP)**

(74) Representative: **Billington, Lawrence Emlyn**
**HASELTINE LAKE & CO Hazlitt House 28**
**Southampton Buildings Chancery Lane**
**London WC2A 1AT (GB)**

## Description

### Technical Field

The present invention relates to a numerical control apparatus having an automatic tool selection function.

### Background Art

In a conventional numerical control apparatus, when a series of machining operations are performed at a single position with different tools, the tools are designated in an order of machining operations, and the machining positions must also be designated in units of tools. However, in the respective machining positions, a workpiece must be often machined in a predetermined order of machining steps. Even in this case, according to the conventional numerical control apparatus, each tool and its machining position must be designated. For example, when tapping is performed, the tools are a center drill, a prepared hole drill, a chamfering drill and a tap, and the order of machining steps is a predetermined or standard order. When a nominal diameter of the tap is designated, nominal diameters of other center and prepared hole drills are determined. However, according to a conventional numerical control apparatus, a tool and a machining position must be designated even for the standard tools and the corresponding order of machining steps, resulting in inconvenience.

### Disclosure of Invention

It is a first object of the present invention to improve the drawbacks of the conventional numerical control apparatus having an automatic tool selection function wherein tools and an order of machining steps need not be specified for tools used in a single machining position and a predetermined order of machining, and a tool and its machining position in a final step are designated to automatically determine the previous tools and the order of previous machining steps.

It is a second object of the present invention to provide a numerical control apparatus having an automatic tool selection function wherein a name of a tool used in a final step of each machining cycle, its nominal diameter and its machining position are used to automatically determine the tools and the order of machining steps when a plurality of tools are used at a single machining position.

In order to achieve the above objects of the present invention, there is provided a numerical control apparatus having an automatic tool selection function and an input unit for entering numerical control machining data such as machining shape data and tools to be used, characterized by comprising: a standard tool file for storing at least tool numbers of tools used in machining and tool numbers of tools used in previous steps to each machining step in standard machining; means for searching a final tool of each machining step entered at said input unit, the final tool being searched from said standard tool file, and for sequentially detecting tool numbers of previous steps so as to determine tools and an order of machining steps for the respective machining steps; machining program producing means for producing a numerical control machining program of the machining steps in accordance with machining shape data which is given for each machining step entered at said input unit, and tool data determined by said tool sequence determining means; and means for storing the numerical control program.

In order to perform machining different from standard machining, a special tool file for storing different tools and the order of machining steps is provided. The tool and tool order determining means accesses the special tool file and the tool file in the order named. In this manner, even when special machining is performed, the tools and the order of machining steps can be automatically selected. Tool name data and nominal diameter data thereof may also be stored in the tool file and the special tool file. In this case, tool designation can includes the tool name and the nominal diameter thereof.

The numerical control apparatus according to the present invention has the arrangement described above. When only the machining position data and the final machining tool data are entered, the necessary tools and the order of machining steps are automatically selected. Therefore, the machining position need not be entered in units of tools. The numerical control program can be easily produced at a high speed.

Even an unskilled worker who is not accustomed to numerical control machining can perform NC machining by designating the final machining tool of each machining cycle. As a result, machining errors can be greatly decreased.

### Brief Description of Drawings

Fig. 1 is a block diagram of a numerical control apparatus according to an embodiment of the present invention;

Fig. 2 shows part of a tool file used in the apparatus shown in Fig. 1;

Figs. 3A and 3B are respectively tables for explaining the formation of a special tool file; and

Fig. 4 is a flow chart for explaining the operation of the apparatus shown in Fig. 1.

### Best Mode of Carrying Out the Invention

The present invention will be described in detail with reference to the accompanying drawings.

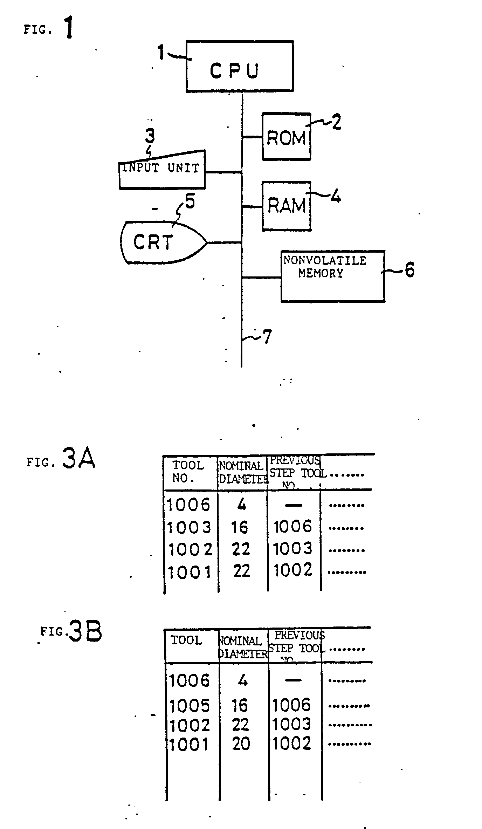

Fig. 1 is a block diagram of a numerical control apparatus according to an embodiment of the present invention. Reference numeral 1 denotes a central processing unit (to be referred to as a CPU hereinafter); and 2, a ROM for storing a control program for controlling the overall operation of the apparatus. The control program stored in the ROM and the CPU 1 constitutes a tool and tool order determining means and a machining program producing means. Reference numeral 3 denotes an input unit such as a keyboard for entering machining data such as a machining shape and tool designation. Reference numeral 4 denotes a RAM for storing processed data; 5, a CRT of a display unit for displaying a produced program or the like; and 6, a memory means for storing a tool file and a special tool file which will be described later, and a produced numerical control machining program. In this embodiment, the memory means 6 comprises a nonvolatile memory such as a bubble memory or the like. Reference numeral 7 denotes a bus.

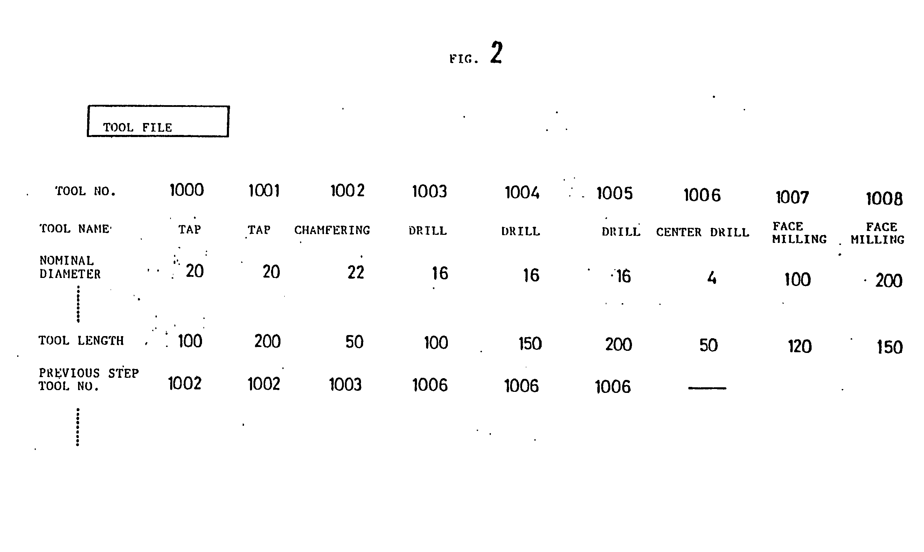

Fig. 2 shows part of the tool file. The tool file includes items such as tool number data, tool name data, nominal diameter data, tool length data and tool data representing a tool used in the immediately previous step. These data for all tools used in the corresponding numerical control machine tool are stored in the tool file. Referring to Fig 2, assume that tool number 1001 is designated in tap machining. The previous tool number is given to 1002 after reference to the tool file. The previous tool number of tool number 1002 is given by the tool file to 1003. In this manner, when the tool file is used and the final tool number is specified in each machining cycle, the first to final standard tools in this cycle can be automatically designated.

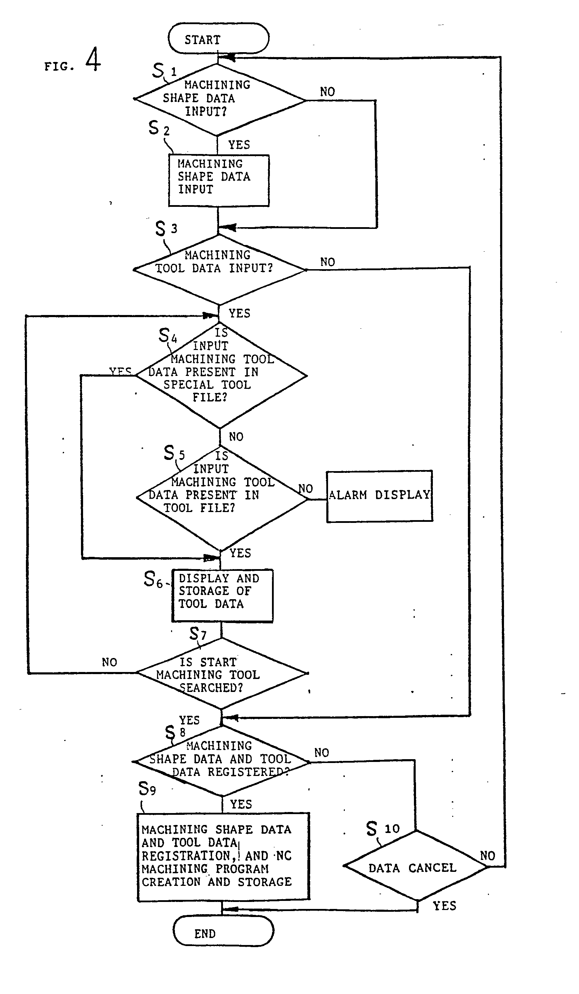

The tools designated by the tool file and their order are standard ones. In the corresponding machining, when the standard tools and the corresponding order of machining steps are not used, a special tool file is produced to designate special tools and a corresponding order of machining steps. In the tool file in Fig. 2, when tapping is performed by designating tool number 1001, the previous tool numbers and order are designated as 1002, 1003 and 1006. Assume that a drill with tool number 1005 is used in place of a drill with tool number 1003. In this case, when tool number 1001 is entered at the input unit 3, the CPU 1 searches the tool file and causes the screen of the CRT 5 to display the standard tapping tools and a corresponding order of machining steps, as shown in Fig. 3A. Then, tool number 1005 is entered in place of tool number 1003 in a list of the special tools and a corresponding order of machining steps. These data are stored in a special tool file shown in Fig. 3B. As a result, the tools and the order of machining steps which are designated by the tapping tool with tool number 1001 are given in an order of 1006, 1003, 1002 and 1001 in the standard tool file. However, the tools are designated in an order of 1006, 1005, 1002 and 1001 in the special tool file.

When the standard tools and the corresponding order of machining steps are used, the special tool file need not be produced. In other words, only the standard tool file is required.

The numerical control machining program is produced by using the standard tool file and the special tool file.

Data is entered at the input unit 3 to set the apparatus in an edit mode. The CPU 1 causes the CRT 5 to display a program so as to edit the control data. Machining shape data and machining tool command are entered at the input unit 3.

As shown in the flow chart of Fig. 4, the CPU 1 discriminates in step S1 whether or not the machining shape data is entered. If YES in step S1, the entered machining shape data is displayed on the CRT in step S2. However, when the machining tool command is entered, i.e., when the tool number of the final tool used in each machining cycle is entered, the CPU 1 searches for a special tool file in the nonvolatile memory in step S4. If the input tool number is not found, the CPU 1 searches the standard tool file in step S5. When the designated machining tool data is found, it is displayed and stored in step S6. When the tool number of the previous step is stored in the special tool file or the standard tool file in step S7, the CPU 1 searches the special or standard tool file again to find the tool number of the previous step in steps S4 and S5.

When a tool which has not been assigned with the tool number of the previous step is found, the CPU 1 discriminates in step S7 that this tool is the first tool in the machining cycle. When an entry switch of the input unit 3 is depressed, the CPU 1 as the machining program producing means causes the nonvolatile memory 6 to store the machining shape data and the machining tool data (tools and the order of machining steps) read out from the special and standard tool files, thereby producing and storing a one-cycle machining program (steps S8 and S9). In this manner, when the special tool number finally used in each machining cycle is entered, the numerical control machining program of the entire NC control operation can be stored in the nonvolatile memory such as the bubble memory 6.

When the special and standard tool files are searched for machining tool data (tool number), and this data is not present therein, the CPU 1 causes the display 5 to give an indication that the desired tool data is not found in step S5'. When a data cancel is not performed in step S10, the operation from step S1 is automatically restarted.

In the above embodiment, and the special tool file is used. However, the standard tools and the corresponding order of machining steps which are stored in the standard tool file can be used for the respective machining steps, and the special tool file need not be used. In this case, the operation in step S4 in Fig. 4 is not required. In the above embodiment, the tool designation is performed by the tool number. However, when there is only a single combination of each tool and the nominal diameter, the tool name and its nominal diameter may be used in place of the tool number.

## Claims

1. A numerical control apparatus having an automatic tool selection function and an input unit for entering numerical control machining data, characterized by comprising: a standard tool file for storing at least tool numbers of tools used in machining and tool numbers of tools used in previous steps to each machining step in standard machining; means for searching a final tool of each machining step entered at said input unit, the final tool being searched from said standard tool file, and for sequentially detecting tool numbers of previous steps so as to determine tools and an order of machining steps for the respective machining steps; machining program producing means for producing a numerical control machining program of machining steps in accordance with machining shape data which is given for each machining process entered at said input unit, and tool data determined by said tool sequence determining means; and means for storing the numerical control program.

2. An apparatus according to claim 1, characterized by further comprising a special tool file for designating a tool different from that designated by said standard tool file, said tool and tool order designating means being searched from said special tool file and said standard tool file in an order named so as to determine designated tools and a corresponding order of machining steps.

3. An apparatus according to claim 1, characterized in that said standard tool file further stores tool name data and nominal diameter data thereof, the tool designation being performed by the tool name data and the nominal diameter data.

4. An apparatus according to claim 2, characterized in that said standard tool file and said special tool file further store tool name data and nominal diameter data thereof, the tool designation being performed by the tool name data and the nominal diameter data.

**Patentansprüche**

1. Numerische Steuerungsvorrichtung, die eine automatische Werkzeugauswahlfunktion aufweist und eine Eingabeeinheit zum Eingeben von numerisch gesteuerte Bearbeitungsvorgänge betreffenden Daten umfaßt, gekennzeichnet durch

eine Standardwerkzeugdatei, die zumindest zum Speichern der Werkzeugnummern von Werkzeugen, welche beim Bearbeiten eines Werkstücks benutzt werden, und der Werkzeugnummern von Werkzeugen, welche in jedem Bearbeitungsschritt vorhergehenden Schritten bei einer Standardbearbeitung benutzt wurden, dient,

Mittel zum Aufsuchen eines Endwerkzeugs für jeden Bearbeitungsschritt, der bei der Eingabeeinheit eingegeben ist, wobei das Endwerkzeug aus der Standardwerkzeugdatei aufgesucht wird, und zum sequentiellen Erfassen von Werkzeugnummern von vorhergehenden Schritten, um so Werkzeuge und eine Reihenfolge von Bearbeitungsschritten für die betreffenden Bearbeitungsvorgänge zu bestimmen,

Bearbeitungsprogramm-Erzeugungsmittel zum Erzeugen eines eine numerische Steuerung bewirkenden Bearbeitungsprogramms für Bearbeitungsschritte in Übereinstimmung mit Formausarbeitungsdaten, die für jeden Bearbeitungsvorgang gegeben sind und bei der Eingabeeinheit eingegeben sind, und mit Werkzeugdaten, die durch die Werkzeugreihenfolge-Bestimmungsmittel bestimmt sind, und

Mittel zum Speichern des die numerische Steuerung bewirkenden Programms.

2. Vorrichtung nach Anspruch 1, gekennzeichnet durch eine Spezialwerkzeugdatei zum Bezeichnen eines Werkzeugs, das unterschiedlich von demjenigen ist, welches durch die Standardwerkzeugdatei bezeichnet ist, wobei die Werkzeug- und Werkzeugreihenfolge-Bestimmungsmittel aus der Spezialwerkzeugdatei und der Standardwerkzeugdatei in einer Reihenfolge aufgesucht werden, die festgelegt ist, um bezeichnete Werkzeuge und eine entsprechende Reihenfolge von Bearbeitungsschritten zu bestimmen.

3. Vorrichtung nach Anspruch 1, dadurch gekennzeichnet, da8 die Standardwerkzeugdatei ferner Werkzeugnamendaten und Nenndurchmesserdaten derselben speichert, wobei die Werkzeugbestimmung durch die Werkzeugnamendaten und die Nenndurchmesserdaten durchgeführt wird.

4. Vorrichtung nach Anspruch 2, dadurch gekennzeichnet, daß die Standardwerkzeugdatei und die Spezialwerkzeugdatei ferner Werkzeugnamendaten und Nenndurchmesserdaten derselben speichern, wobei die Werkzeugbestimmung durch die Werkzeugnamendaten und die Nenndurchmesserdaten durchgeführt wird.

**Revendications**

1. Un appareil à commande numérique présentant une fonction de sélection d'outils automatique et une unité d'entrée pour introduire des données d'usinage à commande numérique, caractérisé en ce qu'il comprend un dossier d'outils standards pour enregistrer au moins les numéros d'outils des outils utilisés dans l'usinage et les numéros d'outils des outils utilisés dans des opérations précédentes à chaque opération d'usinage dans un usinage standard; des moyens pour rechercher un dernier outil de chaque opération d'usinage introduites au niveau de ladite unité d'entrée, le dernier outil étant recherché à partir dudit dossier d'outils standards, et pour détecter de manière séquentielle des numéros d'outils d'opérations précédentes afin de déterminer des outils ainsi qu'un ordre d'opérations d'usinage pour les opérations d'usinage respectives; des moyens de réalisation de programme d'usinage pour réaliser un programme d'usinage à commande numérique des opérations d'usinage en accord avec des données de forme d'usinage qui sont fournies pour chaque opération d'usinage introduite au niveau de ladite unité d'entrée, et des données d'outils déterminées par lesdits moyens de détermination de séquence d'outils; ainsi que des moyens pour enregistrer le programme à commande numérique.

2. Un appareil selon la revendication 1, caractérisé en ce qu'il comprend en outre un dossier d'outils particuliers pour désigner un outil différent de celui désigné par ledit dossier d'outils standards, lesdits moyens de désignation d'outils et d'ordre d'outils étant recherchés à partir dudit dossier d'outils particuliers et dudit dossier d'outils standards dans un ordre indiqué afin de déterminer des outils désignés et un ordre correspondant d'opérations d'usinage.

3. Un appareil selon la revendication 1, caractérisé en ce que ledit dossier d'outils standards enregistre en outre des données de noms d'outils et des données de diamètres nominaux de ces derniers, la désignation d'outils étant effectuée par les données de noms d'outils et les données de diamètres nominaux.

4. Un appareil selon la revendication 2, caractérisé en ce que ledit dossier d'outils standards et ledit dossier d'outils particuliers enregistrent en outre des données de noms d'outils et des données de diamètres nominaux de ceux-ci, la désignation d'outils étant effectuée par les données de noms d'outils et les données de diamètres nominaux.

FIG. 1

FIG. 3A

| TOOL NO. | NOMINAL DIAMETER | PREVIOUS STEP TOOL NO. | ........ |
|------|------|------|------|
| 1006 | 4 | — | ........ |
| 1003 | 16 | 1006 | ........ |
| 1002 | 22 | 1003 | ........ |
| 1001 | 22 | 1002 | ........ |

FIG. 3B

| TOOL | NOMINAL DIAMETER | PREVIOUS STEP TOOL NO. | ........ |
|------|------|------|------|
| 1006 | 4 | — | ........ |
| 1005 | 16 | 1006 | ........ |
| 1002 | 22 | 1003 | ........ |
| 1001 | 20 | 1002 | ........ |

1

FIG. 2

TOOL FILE

| TOOL NO. | 1000 | 1001 | 1002 | 1003 | 1004 | 1005 | 1006 | 1007 | 1008 |
|---|---|---|---|---|---|---|---|---|---|
| TOOL NAME | TAP | TAP | CHAMFERING | DRILL | DRILL | DRILL | CENTER DRILL | FACE MILLING | FACE MILLING |
| NOMINAL DIAMETER | 20 | 20 | 22 | 16 | 16 | 16 | 4 | 100 | 200 |
| TOOL LENGTH | 100 | 200 | 50 | 100 | 150 | 200 | 50 | 120 | 150 |
| PREVIOUS STEP TOOL NO. | 1002 | 1002 | 1003 | 1006 | 1006 | 1006 | —— | | |

FIG. 4

START

S1  MACHINING SHAPE DATA INPUT? — NO

YES

S2  MACHINING SHAPE DATA INPUT

S3  MACHINING TOOL DATA INPUT? — NO

YES

S4  IS INPUT MACHINING TOOL DATA PRESENT IN SPECIAL TOOL FILE? — YES

NO

S5  IS INPUT MACHINING TOOL DATA PRESENT IN TOOL FILE? — NO — ALARM DISPLAY

YES

S6  DISPLAY AND STORAGE OF TOOL DATA

S7  IS START MACHINING TOOL SEARCHED? — NO

YES

S8  MACHINING SHAPE DATA AND TOOL DATA REGISTERED? — NO

YES

S9  MACHINING SHAPE DATA AND TOOL DATA REGISTRATION, AND NC MACHINING PROGRAM CREATION AND STORAGE

S10  DATA CANCEL — NO

YES

END